(19) Europäisches Patentamt
European Patent Office
Office européen des brevets

(11) **EP 4 283 323 B1**

(12) **EUROPEAN PATENT SPECIFICATION**

(45) Date of publication and mention
of the grant of the patent:
**24.12.2025  Bulletin 2025/52**

(21) Application number: **22174785.0**

(22) Date of filing: **23.05.2022**

(51) International Patent Classification (IPC):
**G01S 3/48** *(2006.01)*    *G01S 3/04* *(2006.01)*

(52) Cooperative Patent Classification (CPC):
**G01S 3/48;** G01S 3/043

(54) **COMMUNICATION DEVICE AND METHOD OF OPERATION**

KOMMUNIKATIONSVORRICHTUNG UND VERFAHREN ZUM BETRIEB

DISPOSITIF DE COMMUNICATION ET SON PROCÉDÉ DE FONCTIONNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.11.2023  Bulletin 2023/48**

(73) Proprietor: **NXP B.V.
5656 AG Eindhoven (NL)**

(72) Inventors:
• **SCHOBER, Michael
5656AG Eindhove (NL)**
• **PELEGR N, Pablo Corbalán
5656AG Eindhoven (NL)**
• **VEIT, David
5656AG Eindhoven (NL)**

(74) Representative: **Krott, Michel
NXP Semiconductors
Intellectual Property Group
High Tech Campus 60
5656 AG  Eindhoven (NL)**

(56) References cited:
**WO-A2-2016/053441     US-A1- 2021 333 350
US-B1- 6 195 043**

**Description**

TECHNICAL FIELD

The present disclosure relates to a communication device. Furthermore, the present disclosure relates to a corresponding method of operating a communication device, and to a computer program for carrying out said method.

BACKGROUND

Ultra-wideband (UWB) communication uses a high signal bandwidth, in particular for transmitting digital data over a wide spectrum of frequency bands with very low power. For example, UWB technology may use the frequency spectrum of 3.1 to 10.6 GHz and may feature a high-frequency bandwidth of more than 500 MHz and very short pulse signals, potentially capable of supporting high data rates. The UWB technology enables a high data throughput for communication devices and a high precision for the localization of devices. In particular, UWB technology may be used for so-called ranging operations, i.e., for determining the distance between communicating devices. Therefore, UWB technology may be used to advantage in various applications, such as automotive applications.

US 2021/333350 A1 describes systems and methods for determining a polarization state of an input RF signal. Two distinct RF antennas receive the input RF signal and output a first antenna signal and a second antenna signal. Polarizations of the first and second antenna signals are orthogonal to one another. The first antenna signal is converted to a first optical signal, and the first optical signal is passed through a first optical channel to introduce a first delay. The delayed first optical signal is converted to a first RF signal. An amplitude ratio and a phase difference are determined between the first RF signal and a second RF signal that is associated with the second antenna and optionally includes a second delay. A polarization angle or polarization type of the input RF signal is determined based on the amplitude ratio and phase difference of the first and second RF signals.

SUMMARY

In accordance with a first aspect of the present disclosure, a communication device is provided, as defined in claim 1.

In one or more embodiments, the antennas have different polarizations, and the polarization angle estimation unit is configured to estimate the polarization angle by measuring the ratio between the strength of the ultra-wideband signal received at a first one of said antennas and the strength of the ultra-wideband signal received at a second one of said antennas.

In one or more embodiments, the polarization of the first one of said antennas is 0° or substantially 0° and the polarization of the second one of said antennas is different from 0°.

In one or more embodiments, the first one of said antennas is configured to be used for estimating the polarization angle of the ultra-wideband signal and for deriving the PDoA from the ultra-wideband signal, and the second one of said antennas is configured to be used for estimating the polarization angle of the ultra-wideband signal and not for deriving the PDoA from the ultra-wideband signal.

In one or more embodiments, the first one of said antennas and the second one of said antennas are configured to be used for estimating the polarization angle of the ultra-wideband signal and not for deriving the PDoA from the ultra-wideband signal.

In one or more embodiments, one or more third ones of said antennas are configured to be used for deriving the PDoA from the ultra-wideband signal and not for estimating the polarization angle of the ultra-wideband signal.

In one or more embodiments, the processing unit is configured to use the polarization angle estimated by the polarization angle estimation unit to select a predetermined mapping between PDoAs and AoAs, and to use the selected predetermined mapping to determine the AoA of the ultra-wideband signal.

In one or more embodiments, the function is a machine learning algorithm trained for a given antenna design.

In one or more embodiments, a localization system comprises a communication device of the kind set forth.

In accordance with a second aspect of the present disclosure, a method of operating a communication device is conceived, as defined in claim 10.

In one or more embodiments, the antennas have different polarizations, and the polarization angle estimation unit estimates the polarization angle by measuring the ratio between the strength of the ultra-wideband signal received at a first one of said antennas and the strength of the ultra-wideband signal received at a second one of said antennas.

In one or more embodiments, the processing unit uses the polarization angle estimated by the polarization angle estimation unit to select a predetermined mapping between PDoAs and AoAs and uses the selected predetermined mapping to determine the AoA of the ultra-wideband signal.

In accordance with a third aspect of the present disclosure, a computer program is provided, comprising executable instructions which, when executed by a communication device, cause said communication device to carry out a method of the kind set forth.

DESCRIPTION OF DRAWINGS

Embodiments will be described in more detail with reference to the appended drawings.

Fig. 1 shows an example of an AoA measurement system.

Fig. 2 shows a PDoA measurement of a 0° polarized signal.

Fig. 3 shows a PDoA measurement of a 45° polarized signal.

Fig. 4 shows a PDoA measurement of a 90° polarized signal.

Fig. 5 shows an illustrative embodiment of a communication device.

Fig. 6 shows an illustrative embodiment of a method of operating a communication device.

Fig. 7 shows an illustrative embodiment of an AoA measurement system.

Fig. 8 shows another illustrative embodiment of an AoA measurement system.

Fig. 9 shows an illustrative embodiment of a method of determining an AoA.

DESCRIPTION OF EMBODIMENTS

As mentioned above, UWB communication uses a high signal bandwidth, in particular for transmitting digital data over a wide spectrum of frequency bands with very low power. For example, UWB technology may use the frequency spectrum of 3.1 to 10.6 GHz and may feature a high-frequency bandwidth of more than 500 MHz and very short pulse signals, potentially capable of supporting high data rates. The UWB technology enables a high data throughput for communication devices and a high precision for the localization of devices. In particular, UWB technology may be used for so-called ranging operations, i.e., for determining the distance between communicating devices. Therefore, UWB technology may be used to advantage in various applications, such as automotive applications.

In particular, UWB technology - also referred to as impulse-radio ultra-wideband (IR-UWB) - is an RF communication technology that uses pulses having a short duration for data communication. An important feature of IR-UWB technology is that it can be used for secure and accurate distance measurements between two or more devices. Typical distance measurement methods are the so-called single-sided two-way ranging (SS-TWR) method and the double-sided two-way ranging (DS-TWR) method.

Because UWB technology has an accurate distance measurement capability, it may be used to advantage in access systems in which the position of devices should be determined to enable access to an object. For instance, a vehicle access system may comprise a user's smart device (e.g., key fob) and another smart device (e.g., an anchor embedded in the vehicle). To enable access to the vehicle, the user's smart device must have a predefined range relative to the other smart device. Typically, the user's smart device should be within a predefined number of meters from the other smart device. Therefore, UWB transceivers are typically configured to operate in a ranging mode. In another example, UWB technology may be used for accessing a building or a predefined space within a building.

In the ranging mode of operation, so-called UWB frames (i.e., UWB signals) will typically be exchanged between two devices via at least one antenna on each device, and at least a SS-TWR operation will be carried out (which may also be referred to as a ping-pong operation). In particular, channel impulse responses (CIRs) are estimated on both devices, timestamps will be generated based on the CIRs on both devices, and those timestamps are exchanged. Then, a time of flight (ToF) is calculated based on the timestamps and a range (i.e., a distance) is calculated based on the ToF. Alternatively, a DS-TWR operation may be carried out (which may also be referred to as a ping-pong-ping operation). The angle-of-arrival (AoA) mode of operation is similar to the ranging mode, but it involves at least two antennas on one device. In particular, in the AoA mode of operation, two phase values associated with at least two CIRs are calculated on one device. Then, a phase difference of arrival (PDoA) is calculated based on the two-phase values, and an AoA is calculated based on the PDoA. The AoA mode of operation may facilitate a more accurate determination of the position of an object and may thus complement ranging operations performed in the ranging mode. As used in this description, the ranging mode of operation may therefore be extended to include the AoA mode of operation, in the sense that when a device operates in the ranging mode, it may optionally perform additional operations which are typically performed in the AoA mode of operation.

Accordingly, a benefit of using an IR-UWB system is that a channel impulse response, as determined by a responder using a received UWB frame, can be used to determine not only the distance (i.e., the range) to an initiator but also the angle of arrival of the incoming radio-frequency (RF) wave from the initiator, which allows the system to use both range and angle for precise localization. It is noted that the format of UWB frames is defined in the technical standard IEEE 802.15.4z-2020 (*IEEE Standard for Low-Rate Wireless Networks, Amendment 1: Enhanced Ultra Wideband (UWB) Physical Layers (PHYs) and Associated Ranging Techniques*). AoA estimation is an important feature of UWB-based communication systems. For instance, AoA estimates can be used for direction finding, localization, and remote control of smart gadgets.

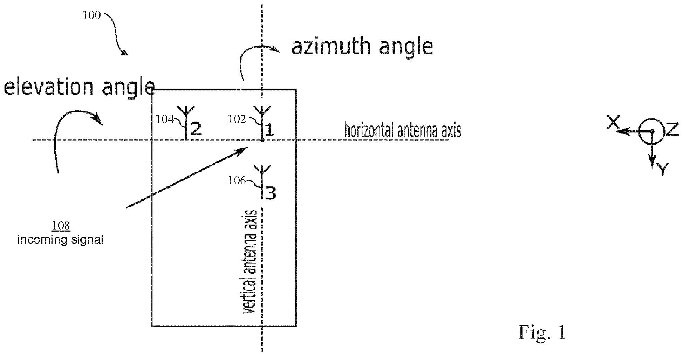

Fig. 1 shows an example of an AoA measurement system 100. The AoA measurement system 100 includes three antennas 102, 104, 106 which may be used for horizontal and vertical AoA estimation. More specifically, the three antennas 102, 104, 106 may be used in two pairs to measure a PDoA of an incoming signal 108 by subtracting, for each pair, the phase of the carrier of the incoming signal 108 at one antenna from the carrier phase measured at the other antenna. Using previously obtained knowledge of the phase behavior of the antenna design, a unique mapping between PDoA values and AoAs (horizontal and vertical angle) values can be derived. This means that based on the calibration of the antenna design, a function can be derived as shown in equations (1) and (2).

$$(\text{Eq. 1}) \qquad AoA_{horizontal} = f(pdoa1, pdoa2)$$

$$(\text{Eq. 2}) \qquad AoA_{vertical} = g(pdoa1, pdoa2)$$

Equations (1) and (2) simplify the physical RF measurement system by using only *pdoa1* and *pdoa2* as input for the AoA estimation algorithm or mapping method. In a real-world scenario, however, it may not be possible to accurately determine the angle of arrival of the incoming signal 108 using only these PDoA values, because the incoming signal 108 may have different polarization angles. This variance in polarization angles may result in significant errors in the estimation of the angle of arrival.

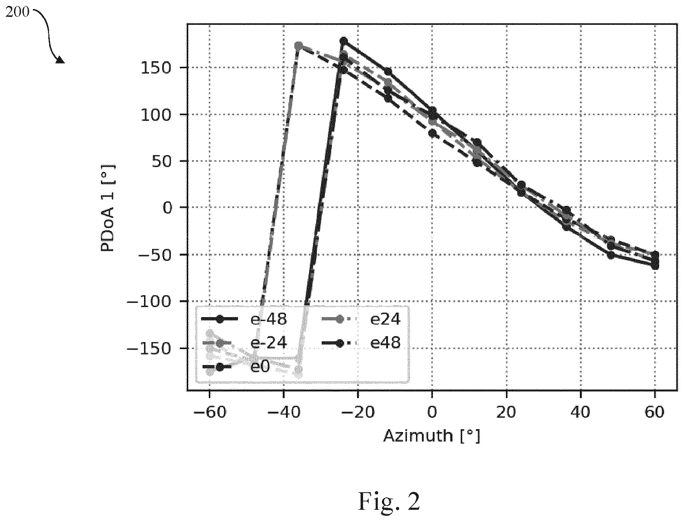

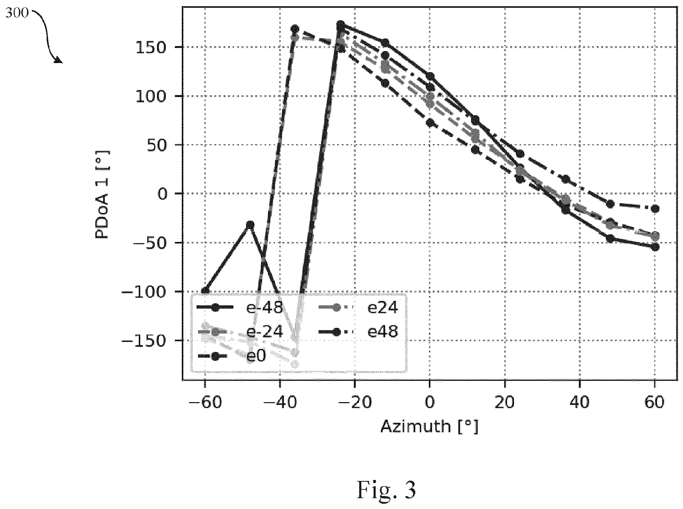

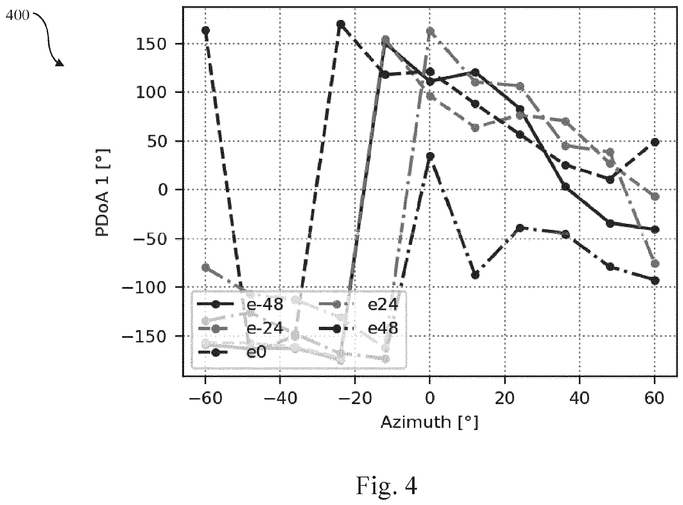

**Figs. 2 to 4** show PDoA measurements of differently polarized signals. In particular, fig. 2 shows a PDoA measurement 200 of a 0° polarized signal, Fig. 3 shows a PDoA measurement 300 of a 45° polarized signal, and Fig. 4 shows a PDoA measurement 400 of a 90° polarized signal. In particular, the *pdoa1* behavior is shown of a real antenna system for different polarization values of the incoming signal. The horizontal axis shows the azimuth angle of the incoming signal, the vertical axis shows the corresponding *pdoa1* behavior measured at the horizontal antenna pair. The different curves show the impact of the elevation angle on the *pdoa1* measurement. It can be seen that a change from a 0° polarized signal to a 90° polarized signal has a significant impact on the phase behavior of the antenna system, which may result in large AoA estimation errors if one only relies on the PDoA values as input.

Now discussed are a communication device and a corresponding method of operating a communication device, which facilitate increasing the accuracy of angle of arrival (AoA) estimations.

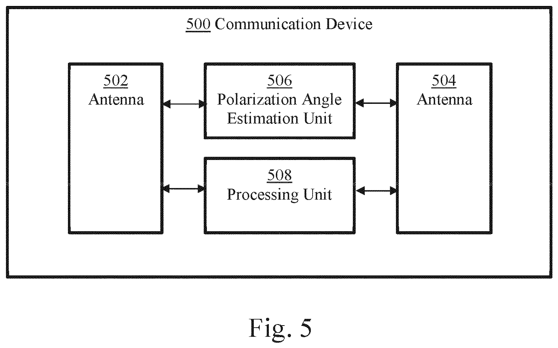

Fig. 5 shows an illustrative embodiment of a communication device 500. The communication device 500 comprises a plurality of antennas 502, 504, a polarization angle estimation unit 506 and a processing unit 508. The antennas 502, 504 are configured to receive an ultra-wideband signal from an external communication device (not shown). The processing unit 508 is configured to determine an AoA of the ultra-wideband signal, wherein said AoA is based on a PDoA derived from the ultra-wideband signal. The polarization angle estimation unit 506 is configured to estimate a polarization angle of the ultra-wideband signal. Furthermore, the processing unit 508 is configured to determine the AoA of the ultra-wideband signal using the polarization angle estimated by the polarization angle estimation unit 506. The inventors have found that by taking into account the estimated polarization angle of the incoming ultra-wideband signal, the accuracy of the AoA determination may be improved significantly. The skilled person will appreciate that, although the polarization angle estimation unit 506 and the processing unit 508 have been shown as separate units, they may in practice be integrated into the same component of the communication device 500. Furthermore, the polarization angle estimation unit 506 may also be implemented as a function performed by the processing unit 508.

It is noted that the polarization angle of a signal, or in other words the polarization of an electromagnetic wave, is defined by the direction of the electric field vector. For a linear polarization the field vector moves along a line which has a defined angle in space. For example, a vertical polarization means that the electric field vector is vertically aligned, i.e., points up or down at an angle of 90°, and a horizontal polarization means that the electric field vector is horizontally aligned, i.e., points left or right at an angle of 0°. The skilled person will appreciate that the electric field vector can also be aligned at any arbitrary angle, for example 45°. Furthermore, it is noted that most antennas are built to receive signals with a given polarization. For instance, a simple dipole antenna which is vertically aligned receives vertically polarized EM waves much better than horizontally polarized waves. In this case, a better reception means that the antenna gain for this type of polarization is higher, or in other words that the power received by the antenna relative to the power of the incident wave is higher. Consequently, if two dipole antennas are used, one of which is horizontally oriented and the other vertically oriented, the polarization angle of an incoming electromagnetic wave can be estimated by looking at the ratio of the powers output by the two antennas. This is possible because for instance a linearly polarized EM wave with a polarization angle of 45° can be represented as two superpositioned electromagnetic waves with polarization angles of 0° and 90°, respectively, and magnitude 1/sqrt (2). Furthermore, it is noted that the same principles extend to circular polarization, which includes the case that the two field vectors that are summed are not in phase.

In one or more embodiments, the antennas have different polarizations, and the polarization angle estimation unit is configured to estimate the polarization angle by measuring the ratio between the strength of the ultra-wideband signal received at a first one of said antennas and the strength of the ultra-wideband signal received at a second one of said antennas. In this way, the estimation of the polarization angle of the incoming ultra-wideband signal is facilitated. In a practical implementation, the polarization of the first one of said antennas is 0° or substantially 0° and the polarization of the second one of said antennas is different from 0°. It is noted that an optimal polarization of the second one of said antennas is 90°.

In one or more embodiments, the first one of said antennas is used for estimating the polarization angle of the ultra-wideband signal and for deriving the PDoA from the ultra-wideband signal, and the second one of said antennas is used for estimating the polarization angle of the ultra-wideband signal and is not used for deriving the PDoA from the ultra-wideband signal. Since one of the antennas is configured to be used for two purposes, the hardware cost of the implementation may be reduced. Alternatively, the first one of said antennas and the second one of said antennas are configured to be used for estimating the polarization angle of the ultra-wideband signal and not for deriving the PDoA from the ultra-wideband signal. Since both antennas are configured to be used only for estimating the polarization angle, the accuracy of this estimation may be increased. Furthermore, in one or more embodiments, one or more third ones of said antennas are configured to be used for deriving the PDoA from the ultra-wideband signal and not for estimating the polarization angle of the ultra-wideband signal. Since these antennas are configured to be used only for deriving the PDoA from the ultra-wideband signal, the PDoA derivation and consequently the AoA estimation may be optimized more easily.

In one or more embodiments, the processing unit is configured to use the polarization angle estimated by the polarization angle estimation unit to select a predetermined mapping between PDoAs and AoAs, and to use the selected predetermined mapping to determine the AoA of the ultra-wideband signal. This results in a practical implementation, in which the estimated polarization angle of the incoming ultra-wideband signal is taken into account for determining its angle of arrival. Furthermore, in one or more embodiments, the polarization angle estimation unit is configured to estimate the polarization angle by applying a pre-calibrated function on a gain ratio and different PDoAs obtained through different ones of said antennas. In this way, the estimation of the polarization angle of the incoming ultra-wideband signal is facilitated, in particular for antenna designs which cannot easily be optimized. In a practical implementation, the function is a machine learning algorithm trained for a given antenna design. The skilled person will appreciate that the presently disclosed communication device may be used to advantage in a localization system or in any other system in which AoA estimations are performed.

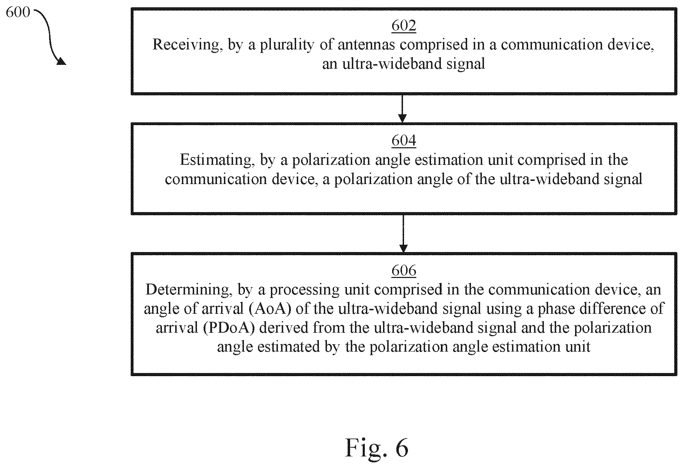

Fig. 6 shows an illustrative embodiment of a method 600 of operating a communication device. The method 600 comprises the following steps. At 602, a plurality of antennas comprised in a communication device receives an ultra-wideband signal. At 604, a polarization angle estimation unit comprised in the communication device estimates a polarization angle of the ultra-wideband signal. At 606 a processing unit comprised in the communication device determines an angle of arrival (AoA) of the ultra-wideband signal using a phase difference of arrival (PDoA) derived from the ultra-wideband signal and the polarization angle estimated by the polarization angle estimation unit. As mentioned above, by taking into account the estimated polarization angle of the incoming ultra-wideband signal, the accuracy of the AoA determination may be improved significantly.

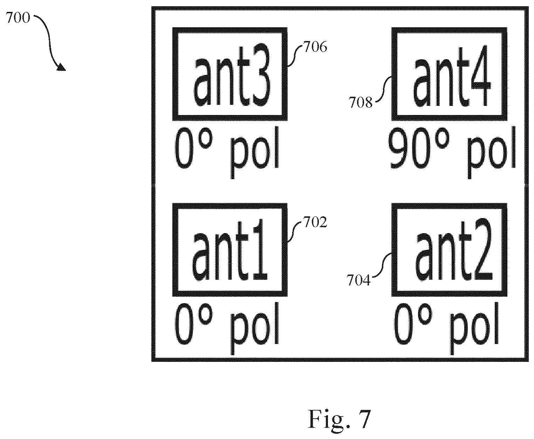

Fig. 7 shows an illustrative embodiment of an AoA measurement system 700. In particular, the AoA measurement system 700 comprises four antennas 702, 704, 706, 708. The first three antennas 702, 704, 706 are 0° linearly polarized, while the fourth antenna 708 is 90° linearly polarized. In this arrangement, first three antennas 702, 704, 706 may be used for a PDoA-based AoA estimation and the fourth antenna 708 is used as an additional input for estimating the received signal polarization. Assuming that a signal with a polarization angle $\alpha$ is received by such an antenna arrangement, the signal strength of the received signals at the first antenna 702 and the fourth antenna 708 follow equation (3) and (4), wherein *Psig* denotes the strength of the signal and *Pant1* and *Pant4* denote the received signal strength at the respective antennas. It is noted that the signal strength at the second antenna 704 and the third antenna 706 should show a similar behavior as for the first antenna 702.

As mentioned above, there are different types of polarization directions of electromagnetic waves. A linear polarization direction means that the electric field vector moves along a line with a constant angle in space. A circular polarization direction means that the electric field vector rotates in a circle over time. This can be achieved by adding two linearly polarized waves with equal magnitude, where one is 90° out of phase with the other. Furthermore, an elliptic polarization refers to a combination of two linearly polarized waves with different magnitudes and phases. It is noted that most antennas are designed to receive waves having a specific one of these polarization types and suppress others. A linearly polarized antenna is built to receive a linearly polarized wave with a given angle relative to the antenna, for example to receive vertically polarized waves and suppress horizontally polarized waves. Furthermore, it is noted that these angles are relative to the coordinate system of the antenna.

$$(Eq. 3) \qquad P_{ant1} = P_{sig} * |cos(\alpha)|$$

$$(Eq. 4) \qquad P_{ant4} = P_{sig} * |sin(\alpha)|$$

Equations (3) and (4) show the simplified signal strength behavior for ideal, linearly polarized, and omnidirectional antennas with the same gain. In case of a nearly ideal antenna design the polarization, angle may be estimated as shown in equation (5). If the gain of the antennas (i.e., the first antenna 702 and the fourth antenna 708) is not the same, a power scaling ratio may be applied. However, in order to simplify the design identical antenna elements with a smooth radiation pattern may be used.

$$(Eq. 5) \qquad \alpha = arctan \left( \frac{P_{ant4}}{P_{ant1}} \right)$$

After the polarization has been calculated by comparing the strength of the signals received at the vertically and horizontally polarized antennas, the AoA may be estimated by using the PDoAs of the 0° polarized antennas and the knowledge of the polarization. In other words, based on the polarization angle estimate one may select the corresponding PDoA to AoA calibration mapping that yields the best AoA estimation performance. Which algorithm is used for the AoA estimation (e.g., a machine learning algorithm, a look-up table approach, or a simple higher order equation) is system- and use case-dependent and may vary depending on the available computational power, the amount of time available for AoA computation, and other factors and system requirements. It is noted that a vertically polarized antenna is an antenna which is 90° linearly polarized, and a horizontally polarized antenna is an antenna which is 0° linearly polarized.

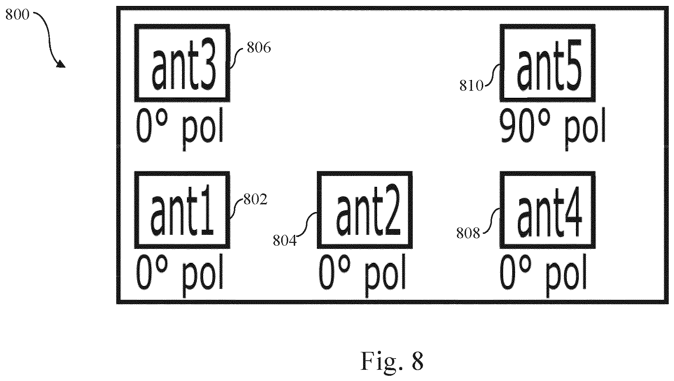

Fig. 8 shows another illustrative embodiment of an AoA measurement system 800. In particular, the AoA measurement system 800 comprises five antennas 802, 804, 806, 808, 810. The first four antennas 802, 804, 806, 808 are 0° linearly polarized, while the fifth antenna 810 is 90° linearly polarized. In this arrangement, the first, second and third antenna 802, 804, 806 are used for deriving the PDoA from the ultra-wideband signal, but not for estimating the polarization angle of the ultra-wideband signal. Furthermore, the fourth and fifth antenna 808, 810 are used for the polarization angle of the ultra-wideband signal, but not for deriving the PDoA from the ultra-wideband signal. Thus, another potential antenna topology is shown, which may be used for AoA and polarization estimation. This topology is easier to optimize, because the first three antennas 802, 804, 806 may be optimized to yield a good phase behavior (i.e., unambiguous PDoA curves) and the last two antennas 808, 810 may be optimized to provide accurate polarization estimates (i.e., an omnidirectional gain pattern). This means that instead of designing antennas which should be optimized on the basis of two criteria, i.e., the gain pattern as well as the PDoA curves, only one criterion needs to be considered for each antenna, which renders the design process significantly easier.

In order to cope with less optimized antenna designs, the polarization angle of the incoming signal may be estimated in another manner. In real world scenarios optimizing the antenna design may be difficult, due to space and cost constraints. In such scenarios the gain ratio between the antennas' polarization used for the polarization estimation may be also angle-dependent; additionally, the antenna polarization might not be ideally 0° and 90°. In that case, the polarization angle may be a function of the measured PDoAs, as shown in equation (6).

$$(Eq. 6) \qquad \alpha = f\big(pdoa1, pdoa2, k_{gain}\big)$$

By making a calibration measurement over multiple polarizations and signal polarizations, the function shown in equation (6) may be approximated and subsequently used for polarization estimation, also under non-ideal conditions. The skilled person will appreciate that the way in which the function shown in equation 6 is created may again be dependent on the antenna design and system requirements. A common approach for finding a solution for equation 6 is to use a machine learning (ML) algorithm that is trained for the given antenna design. Another solution may be to search for the minimum difference between the calibration data and the measured data, which is able to indicate the polarization angle with the calibration solution (e.g., a least squares estimator).

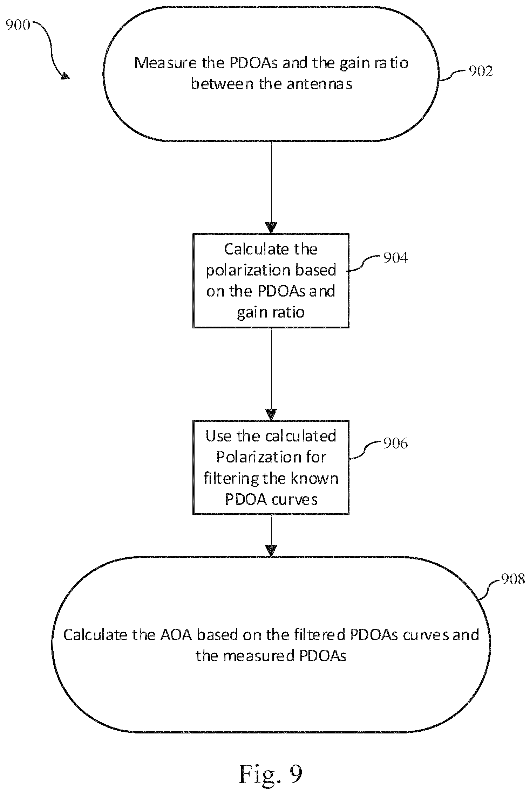

Fig. 9 shows an illustrative embodiment of a method 900 of determining an AoA. As a first step 902 the PDoAs and the corresponding gain ratios are measured. As a second step 904 the polarization angle of the incoming signal is estimated in the way set forth above. Once the polarization is known, it may be used for filtering 906 the calibration data. For example, if the estimated polarization angle is 0°, only the calibration data of the 0° polarization measurement is used as a basis for the AoA estimation. If no calibration data is available for a given angle, an artificial dataset may have to be created based on a known behavior of the system associated with the measured polarization. To create this dataset, interpolation between the closest available points may be applied, for example a linear interpolation between 4 points (above, below, left, right). Once the dataset has been created and filtered, the AoAs may be calculated 908 based on the measured PDoAs and the calibration data. Depending on the available computational power and the complexity of the antenna design the AoA may also be calculated directly as a function of the PDoAs and the gain ratio, as shown in equations (7) and (8).

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

LIST OF REFERENCE SIGNS

100    AoA measurement system

| | |
|---|---|
| 102 | antenna |
| 104 | antenna |
| 106 | antenna |
| 108 | incoming signal |
| 200 | PDoA measurement of a 0° polarized signal |
| 300 | PDoA measurement of a 45° polarized signal |
| 400 | PDoA measurement of a 90° polarized signal |
| 500 | communication device |
| 502 | antenna |
| 504 | antenna |
| 506 | polarization angle estimation unit |
| 508 | processing unit |
| 600 | method of operating a communication device |
| 602 | receiving, by a plurality of antennas comprised in a communication device, an ultra-wideband signal |
| 604 | estimating, by a polarization angle estimation unit comprised in the communication device, a polarization angle of the ultra-wideband signal |
| 606 | determining, by a processing unit comprised in the communication device, an angle of arrival (AoA) of the ultra-wideband signal using a phase difference of arrival (PDoA) derived from the ultra-wideband signal and the polarization angle estimated by the polarization angle estimation unit |
| 700 | AoA measurement system |
| 702 | first antenna |
| 704 | second antenna |
| 706 | third antenna |
| 708 | fourth antenna |
| 800 | AoA measurement system |
| 802 | first antenna |
| 804 | second antenna |
| 806 | third antenna |
| 808 | fourth antenna |
| 810 | fifth antenna |
| 900 | method of determining an AoA |
| 902 | measure the PDoAs and the gain ratio between the antennas |
| 904 | calculate the polarization based on the PDoAs and gain ratio |
| 906 | use the calculated polarization for filtering the known PDoA curves |
| 908 | calculate the AoA based on the filtered PDoA curves and the measured PDoAs |

**Claims**

1. A communication device (500), comprising:

   a plurality of antennas (502, 504) configured to receive an ultra-wideband signal;
   a processing unit (508) configured to determine an angle of arrival, AoA, of the ultra-wideband signal, wherein said AoA is based on a phase difference of arrival, PDoA, derived from the ultra-wideband signal;
   a polarization angle estimation unit (506) configured to estimate a polarization angle of the ultra-wideband signal;
   wherein the processing unit (508) is further configured to determine the AoA of the ultra-wideband signal using the polarization angle estimated by the polarization angle estimation unit (506);
   **characterized in that** the polarization angle estimation unit (506) is configured to estimate the polarization angle by applying a pre-calibrated function on a gain ratio and different PDoAs obtained through different ones of said antennas (502, 504).

2. The communication device (500) of claim 1, wherein the antennas (502, 504) have different polarizations and wherein the polarization angle estimation unit (506) is configured to estimate the polarization angle by measuring the ratio between the strength of the ultra-wideband signal received at a first one of said antennas (502, 504) and the strength of the ultra-wideband signal received at a second one of said antennas (502, 504).

3. The communication device (500) of claim 2, wherein the polarization of the first one of said antennas (502, 504) is 0° or substantially 0° and the polarization of the second one of said antennas (502, 504) is different from 0°.

4. The communication device (500) of claim 2 or 3, wherein the first one of said antennas (502, 504) is configured to be used for estimating the polarization angle of the ultra-wideband signal and for deriving the PDoA from the ultra-wideband signal, and the second one of said antennas (502, 504) is configured to be used for estimating the polarization angle of the ultra-wideband signal and not for deriving the PDoA from the ultra-wideband signal.

5. The communication device (500) of claim 2 or 3, wherein the first one of said antennas (502, 504) and the second one of said antennas (502, 504) are configured to be used for estimating the polarization angle of the ultra-wideband signal and not for deriving the PDoA from the ultra-wideband signal.

6. The communication device (500) of any one of claims 2 to 5, wherein one or more third ones of said antennas (502, 504) are configured to be used for deriving the PDoA from the ultra-wideband signal and not for estimating the polarization angle of the ultra-wideband signal.

7. The communication device (500) of any preceding claim, wherein the processing unit (508) is configured to use the polarization angle estimated by the polarization angle estimation unit (506) to select a predetermined mapping between PDoAs and AoAs, and to use the selected predetermined mapping to determine the AoA of the ultra-wideband signal.

8. The communication device (500) of any preceding claim, wherein the function is a machine learning algorithm trained for a given antenna design.

9. A localization system comprising the communication device (500) of any preceding claim.

10. A method (600) of operating a communication device, the communication device comprising a plurality of antennas, a processing unit and a polarization angle estimation unit, the method comprising:

receiving (602), by the antennas, an ultra-wideband signal;
estimating (604), by the polarization angle estimation unit, a polarization angle of the ultra-wideband signal;
determining (606), by the processing unit, an angle of arrival, AoA, of the ultra-wideband signal using a phase difference of arrival, PDoA, derived from the ultra-wideband signal and the polarization angle estimated by the polarization angle estimation unit;
**characterized in that** the polarization angle estimation unit estimates the polarization angle by applying a pre-calibrated function on a gain ratio and different PDoAs obtained through different ones of said antennas.

11. The method (600) of claim 10, wherein the antennas have different polarizations and wherein the polarization angle estimation unit estimates the polarization angle by measuring the ratio between the strength of the ultra-wideband signal received at a first one of said antennas and the strength of the ultra-wideband signal received at a second one of said antennas.

12. The method (600) of claim 10 or 11, wherein the processing unit uses the polarization angle estimated by the polarization angle estimation unit to select a predetermined mapping between PDoAs and AoAs and uses the selected predetermined mapping to determine the AoA of the ultra-wideband signal.

13. A computer program comprising executable instructions which, when executed by a communication device (500), cause said communication device (500) to carry out the method (600) of any one of claims 10 to 12.

**Patentansprüche**

1. Kommunikationsvorrichtung (500), umfassend:

eine Mehrzahl von Antennen (502, 504), die zum Empfangen eines Ultrabreitbandsignals ausgelegt ist;
eine Verarbeitungseinheit (508), die zum Bestimmen eines Ankunftswinkels, AoA, des Ultrabreitbandsignals ausgelegt ist, wobei der AoA auf einer Ankunftsphasendifferenz, PDoA, basiert, die aus dem Ultrabreitbandsignal abgeleitet wird;
eine Polarisationswinkelschätzeinheit (506), die zum Schätzen eines Polarisationswinkels des Ultrabreitbandsignals ausgelegt ist;
wobei die Verarbeitungseinheit (508) ferner dazu ausgelegt ist, den AoA des Ultrabreitbandsignals unter Verwendung des von der Polarisationswinkelschätzeinheit (506) geschätzten Polarisationswinkels zu bestimmen;

**dadurch gekennzeichnet, dass** die Polarisationswinkelschätzeinheit (506) dazu ausgelegt ist, den Polarisationswinkel durch Anwenden einer vorkalibrierten Funktion auf ein Verstärkungsverhältnis und verschiedene PDoAs zu schätzen, die über verschiedene der Antennen (502, 504) erhalten werden.

2.  Kommunikationsvorrichtung (500) nach Anspruch 1, wobei die Antennen (502, 504) unterschiedliche Polarisationen aufweisen und wobei die Polarisationswinkelschätzeinheit (506) dazu ausgelegt ist, den Polarisationswinkel durch Messen des Verhältnisses zwischen der Stärke des an einer ersten der Antennen (502, 504) empfangenen Ultrabreitbandsignals und der Stärke des an einer zweiten der Antennen (502, 504) empfangenen Ultrabreitbandsignals zu schätzen.

3.  Kommunikationsvorrichtung (500) nach Anspruch 2, wobei die Polarisation der ersten der Antennen (502, 504) 0° oder im Wesentlichen 0° beträgt und die Polarisation der zweiten der Antennen (502, 504) von 0° verschieden ist.

4.  Kommunikationsvorrichtung (500) nach Anspruch 2 oder 3, wobei die erste der Antennen (502, 504) dazu ausgelegt ist, zum Schätzen des Polarisationswinkels des Ultrabreitbandsignals und zum Ableiten der PDoA aus dem Ultrabreitbandsignal verwendet zu werden, und die zweite der Antennen (502, 504) dazu ausgelegt ist, zum Schätzen des Polarisationswinkels des Ultrabreitbandsignals und nicht zum Ableiten der PDoA aus dem Ultrabreitbandsignal verwendet zu werden.

5.  Kommunikationsvorrichtung (500) nach Anspruch 2 oder 3, wobei die erste der Antennen (502, 504) und die zweite der Antennen (502, 504) dazu ausgelegt sind, zum Schätzen des Polarisationswinkels des Ultrabreitbandsignals und nicht zum Ableiten der PDoA aus dem Ultrabreitbandsignal verwendet werden.

6.  Kommunikationsvorrichtung (500) nach einem der Ansprüche 2 bis 5, wobei eine oder mehrere dritte der Antennen (502, 504) dazu ausgelegt sind, zum Ableiten der PDoA aus dem Ultrabreitbandsignal und nicht zum Schätzen des Polarisationswinkels des Ultrabreitbandsignals verwendet zu werden.

7.  Kommunikationsvorrichtung (500) nach einem der vorangehenden Ansprüche, wobei die Verarbeitungseinheit (508) dazu ausgelegt ist, den von der Polarisationswinkelschätzeinheit (506) geschätzten Polarisationswinkel zu verwenden, um eine vorbestimmte Zuordnung zwischen PDoAs und AoAs auszuwählen und die ausgewählte vorbestimmte Zuordnung zum Bestimmen des AoA des Ultrabreitbandsignals zu verwenden.

8.  Kommunikationsvorrichtung (500) nach einem der vorangehenden Ansprüche, wobei die Funktion ein Algorithmus für maschinelles Lernen ist, der für ein gegebenes Antennendesign trainiert ist.

9.  Lokalisierungssystem, umfassend die Kommunikationsvorrichtung (500) nach einem der vorhergehenden Ansprüche.

10. Verfahren (600) zum Betreiben einer Kommunikationsvorrichtung, wobei die Kommunikationsvorrichtung eine Mehrzahl von Antennen, eine Verarbeitungseinheit und eine Polarisationswinkelschätzeinheit umfasst, wobei das Verfahren Folgendes umfasst:

Empfangen (602) eines Ultrabreitbandsignals durch die Antennen;
Schätzen (604) eines Polarisationswinkels des Ultrabreitbandsignals durch die Polarisationswinkelschätzeinheit;
Bestimmen (606) eines Ankunftswinkels, AoA, des Ultrabreitbandsignals durch die Verarbeitungseinheit unter Verwendung einer aus dem Ultrabreitbandsignal abgeleiteten Ankunftsphasendifferenz, PDoA, und des von der Polarisationswinkelschätzeinheit geschätzten Polarisationswinkels;
**dadurch gekennzeichnet, dass** die Polarisationswinkelschätzeinheit den Polarisationswinkel durch Anwenden einer vorkalibrierten Funktion auf ein Verstärkungsverhältnis und verschiedene PDoAs schätzt, die über verschiedene der Antennen erhalten werden.

11. Verfahren (600) nach Anspruch 10, wobei die Antennen unterschiedliche Polarisationen aufweisen und wobei die Polarisationswinkelschätzeinheit den Polarisationswinkel durch Messen des Verhältnisses zwischen der Stärke des an einer ersten der Antennen empfangenen Ultrabreitbandsignals und der Stärke des an einer zweiten der Antennen empfangenen Ultrabreitbandsignals schätzt.

**12.** Verfahren (600) nach Anspruch 10 oder 11, wobei die Verarbeitungseinheit den von der Polarisationswinkelschätzeinheit geschätzten Polarisationswinkel verwendet, um eine vorbestimmte Zuordnung zwischen PDoAs und AoAs auszuwählen, und die ausgewählte vorbestimmte Zuordnung verwendet, um den AoA des Ultrabreitbandsignals zu bestimmen.

**13.** Computerprogramm, umfassend ausführbare Anweisungen, die bei Ausführung durch eine Kommunikationsvorrichtung (500) die Kommunikationsvorrichtung (500) zum Durchführen des Verfahrens (600) nach einem der Ansprüche 10 bis 12 veranlassen.

**Revendications**

**1.** Dispositif de communication (500), comprenant :

une pluralité d'antennes (502, 504) configurées pour recevoir un signal ultra-large bande ;
une unité de traitement (508) configurée pour déterminer un angle d'arrivée, AoA, du signal ultra-large bande, ledit AoA est basé sur une différence de phase d'arrivée, PDoA, dérivée du signal ultra-large bande ;
une unité d'estimation d'angle de polarisation (506) configurée pour estimer un angle de polarisation du signal ultra-large bande ;
l'unité de traitement (508) étant configurée en outre pour déterminer l'AoA du signal ultra-large bande à l'aide de l'angle de polarisation estimé par l'unité d'estimation d'angle de polarisation (506) ;
**caractérisé en ce que** l'unité d'estimation d'angle de polarisation (506) est configurée pour estimer l'angle de polarisation en appliquant une fonction, obtenue par une calibration préalable, sur un rapport de gain et différentes PDoA obtenues par différentes antennes parmi lesdites antennes (502, 504).

**2.** Dispositif de communication (500) selon la revendication 1, dans lequel les antennes (502, 504) présentent des polarisations différentes et dans lequel l'unité d'estimation d'angle de polarisation (506) est configurée pour estimer l'angle de polarisation en mesurant le rapport entre la puissance du signal ultra-large bande reçu au niveau d'une première desdites antennes (502, 504) et la puissance du signal ultra-large bande reçu au niveau d'une deuxième desdites antennes (502, 504).

**3.** Dispositif de communication (500) selon la revendication 2, dans lequel la polarisation de la première desdites antennes (502, 504) est de 0° ou sensiblement de 0° et la polarisation de la deuxième desdites antennes (502, 504) est différente de 0°.

**4.** Dispositif de communication (500) selon la revendication 2 ou 3, dans lequel la première desdites antennes (502, 504) est configurée pour être utilisée pour estimer l'angle de polarisation du signal ultra-large bande et pour dériver la PDoA à partir du signal ultra-large bande, et la deuxième desdites antennes (502, 504) est configurée pour être utilisée pour estimer l'angle de polarisation du signal ultra-large bande et non pour dériver la PDoA à partir du signal ultra-large bande.

**5.** Dispositif de communication (500) selon la revendication 2 ou 3, dans lequel la première desdites antennes (502, 504) et la deuxième desdites antennes (502, 504) sont configurées pour être utilisées pour estimer l'angle de polarisation du signal ultra-large bande et non pour dériver la PDoA du signal ultra-large bande.

**6.** Dispositif de communication (500) selon l'une quelconque des revendications 2 à 5, dans lequel une ou plusieurs troisièmes desdites antennes (502, 504) sont configurées pour être utilisées pour dériver la PDoA à partir du signal ultra-large bande et non pour estimer l'angle de polarisation du signal ultra-large bande.

**7.** Dispositif de communication (500) selon l'une quelconque des revendications précédentes, dans lequel l'unité de traitement (508) est configurée pour utiliser l'angle de polarisation estimé par l'unité d'estimation d'angle de polarisation (506) afin de sélectionner une correspondance prédéterminée entre des PDoA et des AoA, et pour utiliser la correspondance prédéterminée sélectionnée afin de déterminer l'AoA du signal ultra-large bande.

**8.** Dispositif de communication (500) selon l'une quelconque des revendications précédentes, dans lequel la fonction est un algorithme d'apprentissage automatique entraîné pour une conception d'antennes donnée.

**9.** Système de localisation comprenant le dispositif de communication (500) selon l'une quelconque des revendications précédentes.

10. Procédé (600) de fonctionnement d'un dispositif de communication, le dispositif de communication comprenant une pluralité d'antennes, une unité de traitement et une unité d'estimation d'angle de polarisation, le procédé comprenant :

la réception (602), par les antennes, d'un signal ultra-large bande ;
l'estimation (604), par l'unité d'estimation d'angle de polarisation, d'un angle de polarisation du signal ultra-large bande ;
la détermination (606), par l'unité de traitement, d'un angle d'arrivée, AoA, du signal ultra-large bande à l'aide d'une différence de phase d'arrivée, PDoA, dérivée du signal ultra-large bande et de l'angle de polarisation estimé par l'unité d'estimation d'angle de polarisation ;
**caractérisé en ce que** l'unité d'estimation d'angle de polarisation estime l'angle de polarisation en appliquant une fonction, obtenue par une calibration préalable, sur un rapport de gain et différentes PDoA obtenues par différentes antennes parmi lesdites antennes.

11. Procédé (600) selon la revendication 10, dans lequel les antennes présentent des polarisations différentes et dans lequel l'unité d'estimation d'angle de polarisation estime l'angle de polarisation en mesurant le rapport entre la puissance du signal ultra-large bande reçu au niveau d'une première desdites antennes et la puissance du signal ultra-large bande reçu au niveau d'une deuxième desdites antennes.

12. Procédé (600) selon la revendication 10 ou 11, dans lequel l'unité de traitement utilise l'angle de polarisation estimé par l'unité d'estimation d'angle de polarisation afin de sélectionner une correspondance prédéterminée entre des PDoA et des AoA, et utilise la correspondance prédéterminée sélectionnée afin de déterminer l'AoA du signal ultra-large bande.

13. Programme d'ordinateur comprenant des instructions exécutables qui, lorsqu'elles sont exécutées par un dispositif de communication (500), amènent ledit dispositif de communication (500) à mettre en œuvre le procédé (600) selon l'une quelconque des revendications 10 à 12.

Fig. 1

Fig. 2

300

Fig. 3

Fig. 4

500 Communication Device

502
Antenna

506
Polarization Angle
Estimation Unit

504
Antenna

508
Processing Unit

Fig. 5

600

602
Receiving, by a plurality of antennas comprised in a communication device, an ultra-wideband signal

604
Estimating, by a polarization angle estimation unit comprised in the communication device, a polarization angle of the ultra-wideband signal

606
Determining, by a processing unit comprised in the communication device, an angle of arrival (AoA) of the ultra-wideband signal using a phase difference of arrival (PDoA) derived from the ultra-wideband signal and the polarization angle estimated by the polarization angle estimation unit

Fig. 6

Fig. 7

Fig. 8

900

Measure the PDOAs and the gain ratio between the antennas  — 902

Calculate the polarization based on the PDOAs and gain ratio  — 904

Use the calculated Polarization for filtering the known PDOA curves  — 906

Calculate the AOA based on the filtered PDOAs curves and the measured PDOAs  — 908

Fig. 9

**EP 4 283 323 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021333350 A1